Europäisches Patentamt

European Patent Office

Office européen des brevets

(19)

(11) Publication number: **0 074 993**

**B1**

(12) **EUROPEAN PATENT SPECIFICATION**

(45) Date of publication of patent specification: **12.09.84**

(21) Application number: **82901164.2**

(22) Date of filing: **02.04.82**

(86) International application number:
**PCT/NL82/00010**

(87) International publication number:
**WO 82/03425 14.10.82 Gazette 82/25**

(51) Int. Cl.³: **F 03 B 17/06, E 02 B 9/00,
F 03 B 7/00**

(54) **APPARATUS FOR UTILIZING THE ENERGY PRESENT IN FLOWING WATER.**

(30) Priority: **02.04.81 NL 8101659**

(43) Date of publication of application:
**30.03.83 Bulletin 83/13**

(45) Publication of the grant of the patent:
**12.09.84 Bulletin 84/37**

(84) Designated Contracting States:
**AT BE CH DE FR GB LI NL SE**

(56) References cited:
**DE-A-2 800 551
DE-C- 474 025
FR-A- 717 946
NL-C- 20 943
US-A-1 425 487
US-A-3 927 330**

(73) Proprietor: **Van BUYTENE, Arend
Burmanlaan 66
NL-2241 JH Wassenaar (NL)**

(72) Inventor: **Van BUYTENE, Arend
Burmanlaan 66
NL-2241 JH Wassenaar (NL)**

(74) Representative: **den Boer, Jan Johannes, Ir.
Octrooibureau Polak & Charlouis Laan Copes
van Cattenburch 80
NL-2585 GD The Hague (NL)**

Courier Press, Leamington Spa, England.

# Description

The invention relates to an apparatus for utilizing the energy present in flowing water, comprising a shaft on which is mounted a blade wheel provided with radial blades, said shaft being rotatably journalled in a support which is adapted to be moored floatingly in the flowing water.

In this technical field, devices are known in the form of water-mills having an undershot-wheel or overshotwheel respectively. Therewith always a gradient in the waterflow at the position of the blade wheel is used, so that the blades at the downstream side of the blade-wheel are not loaded by the resistance of the water present at that side. Such a gradient does not prevail in a river or other flowing water.

An apparatus permitting utilizing the energy present in horizontally flowing water of the type defined in the preamble of claim 1 is known from FR-A-717946. This comprises a blade wheel on a horizontal shaft, which is rotary journalled in a support, the wheel shaft being vertically adjustable relative to the support depending on the required energy. However, the blades experience resistance to the rotary moment from the air through which they move when not immersed in the water.

In order to eliminate this resistance, resulting in higher efficiency, the invention is characterized in that the blades of the blade wheel are each provided with apertures and with a likewise apertured slide movable in the radial direction of the blade relative to the rest of the blade, said slide being moved due to the rotation of the wheel by a cam profile to open the apertures, the cam profile being stationary relative to the support and cooperating with the radial outer end of the slide.

The cam profile allows the apertures to be closed only in that portion of the path traversed by the blades in which the flowing water imparts a positive force to the blades, which causes a driving moment around the wheel shaft.

The blade wheel shaft may be positioned substantially horizontally or substantially vertically in the water. With vertical position the blade wheel may be connected to the support such that the complete width of the blades, as measured in the direction of the shaft, is found below the water level. The cam profile then sees to it that the apertures are opened when the blades move against the water flow direction. A vertical positioning is advantageous, if the water flow velocity is extremely high since the backwardly moving blades then impart a larger braking action than with horizontal positioning and prevents the rotary velocity of the shaft becoming too high.

With horizontal positioning of the shaft, the shaft is preferably mounted to the support such that it is situated some distance above the water level. The blades then experience a resistance because of the water mass, if the force component of the water flow acting thereon is small, i.e. the angle of the blade with the flow direction is still small (when immersing the blade into the water starts) or is small again respectively (when the blade leaves the water).

The air resistance experienced during the backward movement of the blades through the air is smaller due to the open position of the apertures. In the embodiment with horizontal blade wheel shaft, the slides close under the influence of gravity when entering the water. In the embodiment with vertical blade shaft the slides are biased to the closed position by springs.

Of course the apparatus may be multiplied by providing a plurality of blade wheels on the shaft or on different shafts. The shaft or shafts are adapted to be coupled to the input shaft of an electric generator or other machine to be driven. If therewith a second blade wheel is mounted to the same shaft such that the blades thereof show a phase-shift relative to the blades of the first blade wheel, which phase-shift is equal to half the mutual angular spacing of the blades, a more constant driving moment around the shaft is obtained.

The invention will now be described with reference to the drawing, showing an embodiment as an example of the apparatus according to the invention.

Fig. 1 shows schematically a support moored in a water stream and having a shaft provided with two blade wheels.

Fig. 2 is an elevation of a single blade wheel together with a cam profile for closing the slides of the blade wheel.

Fig. 3 is an elevation of a blade with a slide mounted therein.

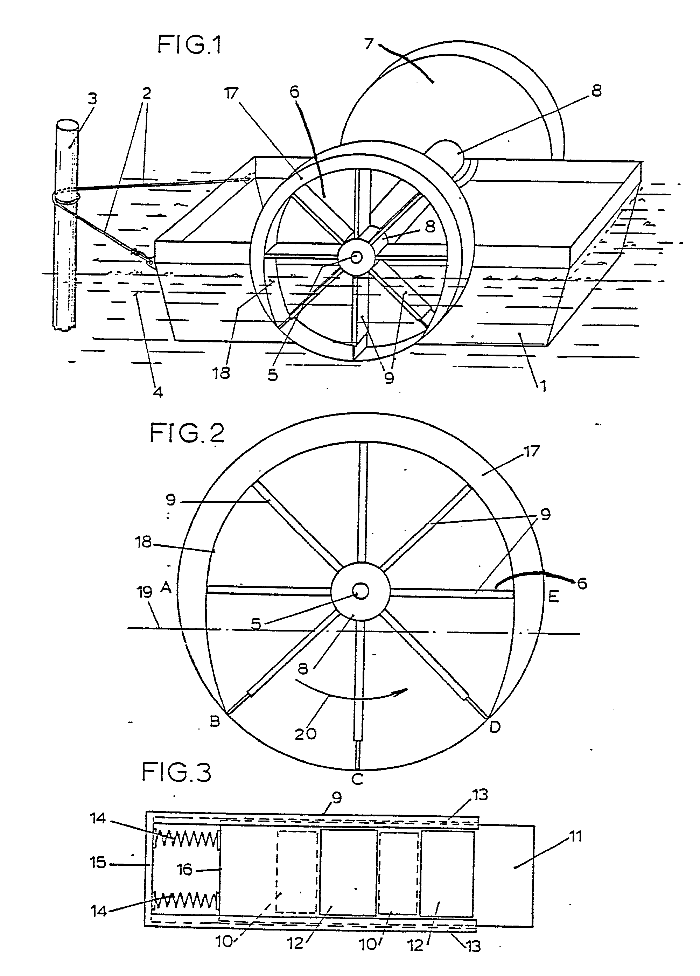

In Fig. 1, a support 1, e.g. a pontoon-shaped hollow body, is moored by cables 2, e.g. to a mooring post 3 in a water stream 4, e.g. a flowing river.

A shaft 5 is provided in the upper part of the support 1 and is journalled in a manner not shown in bearings, so that the shaft is rotatable around its axis. A blade wheel 6 is secured to one end of the shaft 5, such that the blade wheel is situated in a vertical plane and is immersed for about two-third of the height of the lower half of the wheel in the water. In the illustrated embodiment, an identical blade-wheel 7 is provided in a similar manner at the other end of the shaft. Each blade wheel has a hub 8 to which radial blades 9 are secured. In the embodiment shown there are eight blades per wheel but this number may be varied.

One of the blades 9 is shown separately on an enlarged scale in fig. 3. Said blade has two, in the embodiment shown, rectangular apertures 10 indicated by broken lines in fig. 3. A slide 11 likewise has apertures 12 of substantially identical dimensions to those of the apertures 10. Said slide 11 is slideable in guides 13 provided on the longitudinal edges of the blade.

Said guides may be simple recesses in a thicker part of the blade surface, at the edges thereof, in which the edges of the slide 11 are received. The slide 11 is, in the embodiment shown, biased by two compression springs 14, which are contained in a hollow part of the blade between an end edge 15 of the blade and an end edge 16 of the slide.

Beside each blade wheel a plate or annulus 17 is secured to the support 1, to which plate or annulus a cam profile 18 is provided facing towards the blade wheel and extending substantially perpendicular to the plane of said blade wheel. The free ends of the slides of the blades 9 are in engagement with the cam profile 18 and are pressed against it by the springs 14 or by gravity.

In fig. 2 a blade wheel is shown on an enlarged scale. The water line of the water 4 is indicated 19. Due to the force of the flowing water, the blade wheel is rotated according to the arrow 20. As seen in fig. 2, the cam profile 18 extends substantially arcuately, i.e. according to a circular arc, in the part situated above the shaft 5. This part extends from its ends to a larger diameter through an angle of substantially 45°, the difference in diameter between the ends of the profile 18 and the arcuate part thereof being equal to the distance along which the slides 11 are slideable. Due to the rotation of the wheel through the water, the slides 11 are urged inwardly by the profile 18 to a position in which the apertures 10 and 12 overlap each other.

When going from the point A in fig. 2 to the point B, the slide of a blade is urged outwardly by the springs 14 or by gravity and the apertures 10, 12 become closed. As from the point B the flowing water imparts the driving force to the blade, whereby a driving moment around the shaft 5 is generated. The driving force is maximum at the position C of a blade and thereafter grdually decreases up till point D. From the point D the slide is again acted upon by the profile 18 in the portion of the blade path extending to the point E. Then the driving force of the water, which has already largely decreased, drops off completely and simultaneously the resistance experienced from the water behind the blade, as seen in the direction of movement, vanishes. In the portion from the point E to the point A in the upper part of the blade path the slides are positioned to open the apertures 10, 12, so that the air resistance, experienced by the blades, is smaller due to the open apertures.

As said, in the embodiment shown, two blade wheels have been mounted one on each side of the support. Said wheels may be secured to the shaft with a phase shift equal to half the angular spacing between two blades relative to each other. Thereby the generated driving moment becomes more constant.

It will be clear that some form of known transmission, decelerating or accelerating, may be provided between the shaft 5 and an electric generator (not shown) installed in the support, for converting the generated energy into electric tension.

The number of blades per wheel may be different from that shown.

For a practical embodiment the blade wheels may have a diameter of substantially 8 metres, the slides a length of 4 metres, while the slides project beyond the remaining portion of the blades when the apertures are closed by a distance of about 75 cms. The width of the blades may be substantially one meter and the width of the operative area of the slides may be 90 cms.

The closed slides have an operative area for receiving the pressure of the flowing water of about $3.75 \times 1$ metre, that is $3,75 \ m^2$. In contrast to windmills flow energy is always present for waterwheels mounted in the flowing water of a river.

## Claims

1. Apparatus for utilizing the energy present in flowing water, comprising a shaft (5) on which is mounted a blade wheel (6, 7) provided with radial blades (9), said shaft (5) being rotatably journalled in a support (1) which is adapted to be moored floatingly in the flowing water, characterized in that the blades (9) of the blade wheel (6, 7) are each provided with apertures (10) and with a likewise apertured (12) slide (11) movable in the radial direction of the blade relative to the rest of the blade, said slide being moved due to the rotation of the wheel by a cam profile (18) to open the apertures, the cam profile being stationary relative to the support (1) and cooperating with the radial outer end of the slide (11).

2. Apparatus according to claim 1, characterized in that a second blade wheel (7) is mounted on the shaft (5), such that the blades (9) thereof present a phase shift relative to the blades (9) of the first blade wheel (6), which phase shift is equal to half the mutual angular spacing of the blades (9).

## Patentansprüche

1. Vorrichtung zur Benützung der in strömendem Wasser vorhandenen Energie, bestehend aus einer Welle (5) auf welcher ein Schaufelrad (6, 7) montiert ist, welches Rad radiale Schaufeln (9) aufweist, welche Welle (5) rotierbar in einem Träger (1) montiert ist, welcher Träger treibend im strömenden Wasser anbindbar ist, dadurch gekennzeichnet, dass die Schaufeln (9) des Schaufelrads (6, 7) mit Öffnungen (10) und mit einem ebenfalls Öffnungen (12) aufweisenden Schieber (11) versehen ist, welcher Schieber in der radialen Richtung der Schaufel gegenüber dem übrigen Teil der Schaufel bewegbar ist, welcher Schieber während der rotation des Rads von einem Nockenprofil (18) zur Öffnung der Öffnungen bewegt wird, welches Nockenprofil in Bezug auf den Träger (1) stationär ist, und mit dem radialen Aussenende des Schiebers (11) zussamenarbeitet.

2. Vorrichtung nach Anspruch 1, dadurch gekennzeichnet, dass ein zweites Schufelrad (7) auf der Welle (5) montiert ist, derart dass die Schaufeln (9) desselben eine Phaseverschiebung gegenüber den Schaufeln (9) des ersten Schufelrads (6) aufweisen, welche Phaseverschiebung der Hölfte des gegenseitigen Winkelabstands der Schaufeln (9) entspricht.

**Revendications**

1. Dispositif pour utiliser l'énergie présente dans de l'eau courante, comprenant un arbre (5) sur lequel est montée une roue à aubes (6, 7) pourvue d'aubes (9) radiales, ledit arbre (5) étant couché rotativement dans un support (1) adapté à être amarré en position flottante dans l'eau courante, caracterisé en ce que les aubes (9) de la roue (6, 7) à aubes ont été chacune pourvue d'ouvertures (10) et dans coulisseau (11) également pourvu d'ouvertures (12) et étant mouvable dans la direction radiale de l'aube par rapport à l'autre partie de l'aube, ledit coulissseau étant mû par suite de la rotation de la roue au moyen d'une came (18) afin d'ouvrir les ouvertures, le came étant stationaire par rapport au support (1) et coopère avec le bout radialement extérieur du coulisseau (11).

2. Dispositif selon la revendication 1, caracterisé en ce qu'une seconde roue (7) à aubes a été montée sur l'arbre (5) de sorte que les aubes (9) de ladite roue présentent un déplacement de phase par rapport aux aubes (9) de la première roue (6) à aubes, ledit déplacement de phase étant égal à la moitié de la distance mutuelle angulair des aubes (9).

FIG.1

FIG.2

FIG.3